# EUROPEAN PATENT SPECIFICATION

(11) **EP 2 903 724 B1**
(45) Date of publication and mention of the grant of the patent: **28.06.2017**
(21) Application number: 13777153.1
(22) Date of filing: 03.10.2013
(51) Int. Cl.: B01D 61/36

(54) **VACUUM MEMBRANE DISTILLATION SYSTEM AND USE THEREOF**
DESTILLATIONSSYSTEM MIT VAKUUMMEMBRANEN UND VERWENDUNG DAVON
SYSTÈME DE DISTILLATION MEMBRANAIRE SOUS VIDE ET SON UTILISATION

(30) Priority: 11.10.2012 NL 2009613
(43) Date of publication of application: 12.08.2015
(73) Proprietor: Major Bravo Limited, Road Town, Tortola (VG)
(72) Inventor: MAESSEN, Ralph, NL-3047 AC Rotterdam (NL); HOLLERING, Robertus Wilhelmus Jacobus, NL-3047 AC Rotterdam (NL); KONIJNENDIJK, Edgar, NL-3047 AC Rotterdam (NL); WEIJDEMA, Hein, NL-3047 AC Rotterdam (NL)
(74) Representative: 2K Patentanwälte Blasberg Kewitz & Reichel
(86) International application number: PCT/NL2013/050705
(87) International publication number: WO 2014/058309

(56) References cited:
- DE-A1-102005 053 874
- DE-A1-102009 020 179
- GB-A- 2 229 379
- US-A- 4 879 041
- US-A1- 2004 211 726
- US-A1- 2006 144 788
- US-B1- 6 365 051

## Description

### FIELD OF THE INVENTION

The invention relates to a vacuum membrane distillation system comprising at least one membrane distillation module and a condenser module, in which, in use feed is converted into distillate and brine, which distillate is generated in the at least one membrane distillation module and the condenser module, which modules each comprise a vapour channel provided with a condensation wall for condensation of a vapour passed through a membrane in a membrane distillation module, which vapour channel further being provided with a vacuum duct connection to a vacuum duct coupled to a vacuum pump. The invention further relates to the use of such a vacuum membrane distillation system for concentration of a feed into a brine and for generation of a distillate.

### BACKGROUND OF THE INVENTION

Vacuum membrane distillation is known per se as one configuration of membrane distillation, a promising technology for desalting saline water, so as to obtain a useful distillate, as well as for concentrating solutions, such as wastewater. Vacuum membrane distillation has the advantage that heat is transferred from one distillation module to a subsequent distillation module, resulting in a process that is overall quite energy-efficient. On the basis of frames known from WO2010/129718A1 an integrated unit may be designed for a plurality of membrane distillation modules, a condenser module and a preceding heat transfer module. The operation of such a system is for instance disclosed in WO2005/089914A1, particularly in relation to Fig. 5.

However, a major drawback to membrane distillation in general, and also to the configuration of vacuum membrane distillation is known from M. Shatat and S.B. Riffat, Int.J.Low-Carbon Techn. 2012 (online available): the feed water should be free of organic pollutants. Shatat and Riffat ascribe the limited use of membrane distillation to this issue.

Document DE 10 2009 020 179 A1 discloses a conventional vacuum membrane distillation system for converting feed into distillate and brine. Document GB 2 229 379 A describes the use of Venturi pumps in membrane distillation processes.

The problem to be solved by the invention is to provide a vacuum membrane distillation system protecting the vacuum pump from failure through the volatile solutes.

### SUMMARY OF THE INVENTION

According to the invention, a vacuum membrane distillation system in which, in use, feed is converted into distillate and brine, comprises a heat transfer means, a first membrane distillation module, at least one further membrane distillation module and a condenser module.

The heat transfer means transfers heat into a heating channel that is separated by a wall from an adjacent liquid channel of the first membrane distillation module.

The first membrane distillation module comprises the heating channel, the wall and the liquid channel and further comprises a feed entry and a feed exit and a substantially fluid-impermeable, vapour permeable membrane, wherein in use feed enters the liquid channel through the feed entry and is heated by means of the transferred heat transmitted from the heating channel so as to evaporate feed liquid to vapour that may pass through the membrane into a vapour space coupled to a subsequent vapour channel for condensation at a condensation wall, so as to generate distillate and transfer heat to an adjacent liquid channel of a subsequent module.

The at least one further membrane distillation module, in which module, in use, distillate is generated, comprises a vapour channel provided with a condensation wall for condensation of a vapour passed through a membrane in a preceding membrane distillation module.

The condenser module generates distillate from vapour from a preceding, last membrane distillation module, and comprises a vapour channel for receiving said vapour, a condensation wall and a cooling channel through which, in use a cooling liquid flows.

Each of said vapour channels is further provided with a vacuum duct connection to a vacuum duct coupled to a vacuum pump, which vacuum duct connection is located within said vapour channel at a location downstream of the condensation wall. The vacuum pump is a Venturi type pump, which further constitutes removal means for removing a volatile solute from at least one of the vapour channels via said vacuum duct, said removal means being resistant to said volatile solute. The Venturi type pump is further configured for pumping of cooling liquid after passing the condenser module.

According to the invention, a method of converting a feed into a distillate and brine by means of vacuum membrane distillation comprises the steps of:
- Providing an underpressure into the vapour channel of a membrane distillation module via the vacuum duct and the vacuum duct connection of said vapour channel by means of a Venturi type vacuum pump coupled to the vacuum duct;
- Evaporating a portion of the feed in the membrane distillation module into a vapour that passes through a substantially fluid-impermeable, vapour permeable membrane into the vapour channel;
- Converting the vapour partly into distillate by means of condensation against a condensation wall; and
- Removing a volatile solute from the vapour channel through the vacuum duct connection and via the Venturi type vacuum pump, wherein the volatile solute is spoiled away through the Venturi type vacuum pump, and dissolved in a cooling liquid that has passed the condenser module.

The issue with the organic pollutants can be twofold: first, those pollutants could end in the distillate, which then is not suitable as potable water for human consumption and/or for use as disinfected, clean water in situations as needed, for instance in hospitals and in the production of food ingredients, pharmaceuticals and the like. Surprisingly, it was found by the inventors in investigations leading to the invention that such organic pollutants, if volatile enough to pass the membrane, do not condensate against the condensation wall in the vapour channel. These volatile solutes remain present as a vapour.

The second issue relates to the vacuum pump of the vacuum membrane distillation system: it was found that the lifetime of the vacuum pump decreased detrimentally, when certain feeds were used. Since a modular vacuum membrane distillation system is overall a complex system, wherein the vacuum exerted by the vacuum pump is distributed throughout the system, the cause of this failure was not found easily. In the course of time, the inventors understood that volatile solutes caused the failure. These volatile solutes were drawn into the vacuum duct, and thereafter ended up in the vacuum pump.

Volatile solutes refers in the context of the present invention not merely to organic pollutants, but to both volatile organic compounds, such as aceton, ethanol, other organic solvents, hydrocarbons and other such compounds known per se, and also to other volatile compounds, such as for instance hydrogen chloride and such compounds constituting strong acids in water. These compounds can be very corrosive. It is not excluded that some distillate, generally water, will pass with the volatile solutes into the vacuum duct.

In a further embodiment, the removal means are embodied as a separate vapour channel with condensation means. This vapour channel is more preferably located outside an integrated unit of the membrane distillation modules and a condenser module. Within the unit, the temperature remains relatively high due to the constant supply and transfer of heat. It is therefore difficult to achieve sufficient cooling. Outside the unit, room temperature applies, and further active cooling may be applied, for instance with the cooling liquid anyhow available. The volatile solutes may be condensed under such different conditions. The condensation means may be embodied as a condensation wall. However, alternatives are possible, such as a tubular construction with a plurality of hollow fibers or pipes surrounded by a cooling medium; a curved portion of the vacuum duct such that the volatile solutes will flow again a portion of said duct. The condensation means may further be supplemented with means preventing condensed liquid to vaporize again

In yet a further embodiment, the removal means may be embodied as an output for the vapour channel of the first membrane distillation module, said module being designed for operation under conditions at which a feed solvent does not substantially evaporate. This first membrane distillation module is suitably located outside an integrated unit comprising the membrane distillation modules and the condenser module. It could well be of a different design, such as a tubular design rather than a modular design. It does not need to be connected to the vacuum system, although it is not excluded that it operates at an underpressure. Suitably, such removal means are preceded by a pre-heating stage for the feed, so as to bring it at an appropriate temperature, for instance in the range of 30-80 degrees, more suitably 40-65 degrees, or 50-60 degrees.

The choice and further implementation of such removal means depends on the volatile solute, its concentration and the desired product. A highly volatile solvent such as acetone is suitably removed separately, in the first module, particularly when present in significant amounts in the feed. A solute such as hydrogen chloride is more difficult to remove. When present in larger concentrations, it will enter the vapour channel through the membrane. Then, it is preferably removed in a separate condenser. Minor quantities of volatile solutes are effectively removed by means of the Venturi. Moreover, for reasons of certainty, more than one option may be implemented; in other words, it is preferred that the Venturi is anyhow used, so as to avoid the risk that some solutes still destroy the vacuum pump.

The removal means may be implemented in membrane distillation systems of various design for various applications. Typically, such a system comprises a heat transfer means for the transfer heat into a heating channel, which is separated by a wall from an adjacent liquid channel of a membrane distillation module. This - first - membrane distillation module comprises the heating channel, the wall and the liquid channel, and also a feed entry and a feed exit and a substantially fluid-impermeable, vapor permeable membrane. In use, feed enters the liquid channel through the feed entry and is heated by means of the transferred heat transmitted from the heating channel so as to evaporate feed liquid to vapour that may pass through the membrane into a vapor space coupled to a subsequent vapour channel for condensation at a condensation wall, so as to generate distillate and transfer heat to an adjacent liquid channel of a subsequent module. The heat transfer means are most suitably embodied or comprise a heat transfer module. Such a module may be integrated into a unit together with the membrane distillation modules and the condenser module.

According to one suitable design, the heat transfer means is part of a closed circuit in which a heating medium runs. This heating medium is for instance distilled water. The distilled water is heated in a heat exchanger and may be partly vaporized, for instance in that the pressure in the heat transfer means is lower than elsewhere in the circuit. Such a closed circuit is particularly suitable for applications in which the heat exchanger would be contaminated or damaged by the feed.
According to another suitable design, the feed itself is heated up in a heat exchanger, preferably constituting a two-phase mixture of vapour and liquid. This combination was found to increase the yield of the membrane distillation system significantly. The feed could be led completely through the heat transfer means. Alternatively, the two-phase mixture is separated into a primarily liquid stream which enters the first membrane distillation module, and into a primarly vapour stream which enters the heat transfer means.

For cooling the condenser, use can be made of a cooling liquid system that is open, i.e. based on external supply and removal of the cooling liquid, for instance in and/or from a lake, canal, river etc. Alternatively, use can be made of a substantially closed system of cooling liquid, wherein the cooling liquid is transferred to a tank for cooling and storage.

### BRIEF INTRODUCTION OF THE FIGURES

These and other aspects of the invention will be further elucidated with reference to the Figures, which are purely diagrammatical and not drawn to scale, and wherein:
Fig .1 shows diagrammatically a general architecture in accordance with the prior art as shown in WO2005/089914A1;
Fig. 2 shows a schematical view according to one embodiment of the invention;
Fig. 3 shows a view corresponding to that of Fig. 2, but indicating the pressure operation of the system;
Fig. 4-6 show more detailed schematical views specifying sensors and valves for embodiments comprising a jet pump.

### DETAILED DESCRIPTION OF ILLUSTRATED EMBODIMENTS

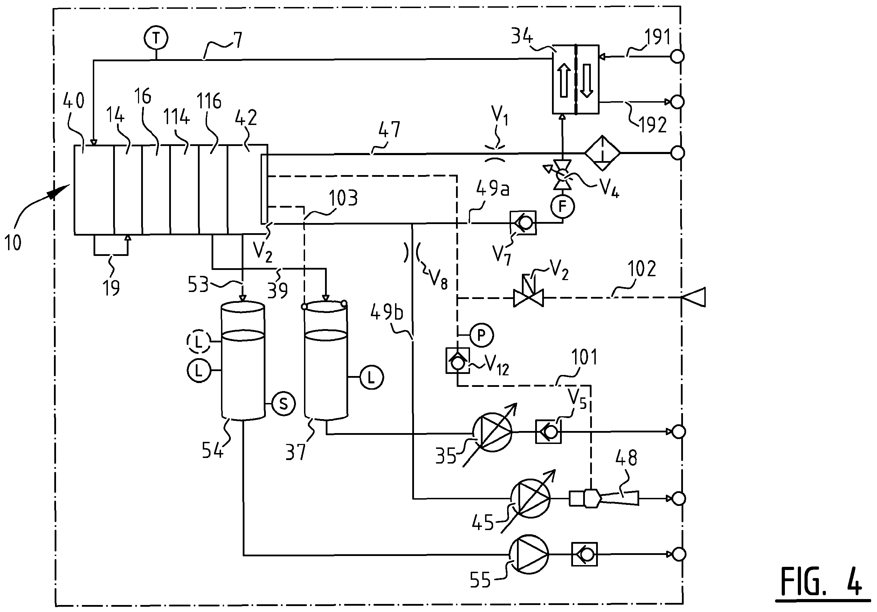

The Figures are not drawn to scale and are intended purely for illustrative purposes. Equal reference numerals in different figures refer to equal or corresponding parts.
Fig .1 shows diagrammatically a general architecture in accordance with the prior art as shown in WO2005/089914 A1. As shown herein, the membrane distillation system 100 comprises a heat transfer module 40, a first membrane distillation module 14, a second membrane distillation module 16 and a separate condenser 42 in the form of a heat exchanger, particularly so as to preheat the feed. As is indicated in the Fig. 4, 5 and 6, the said modules 40, 14, 16, 42 are suitably physically integrated in a modular assembly 10. Cross-connections for pressure, distillate and connections between vapour channel and vapour spaces as well as between the liquid channels may be implemented herein. This integration is deemed beneficial so as to keep heat within the unit and to reduce pressure leakages as much as possible.
Rather than a heat transfer module 40 suitable for integration into the modular system, any other heat transfer means could be used for the provision of heat in the form of condensable vapour, particularly steam. More particularly, the heat transfer means constitute a steam generator for generating steam. Source of the steam may be a separate source, for instance a circulating hot water circuit, but alternatively the feed itself.

Liquid, i.e. particularly an aqueous solution or a fluid mixture, enters the system via a liquid line 7. It is optionally preheated in a heat exchanger 34, but still at atmospheric pressure. Thereafter, it enters the heat transfer module 40 at the fluid entry 8. Here the fluid runs in a liquid channel 12 and evaporates under the influence of the available heat, and subsequently leaves this heat transfer module 40 at the fluid exit 9 as a concentrated fluid. The fluid is thereafter led via a liquid connection 19 to the first membrane distillation module 14, which it enters at the fluid entry 8, runs through in liquid channel 12 and leaves at the fluid exit 9 as a further concentrated fluid. In order to ensure that distillation occurs, the pressure in the first membrane distillation module 14 is lower than that in the heat transfer module 40. Subsequently, the fluid is led through a liquid connection 19 to the second membrane distillation module 16, which it enters at the fluid entry 8, passes through liquid channel 12 and leaves through the fluid exit 9 as an even further concentrated fluid. This fluid is also known as brine and removed via brine exit 39. The brine is in fact present at atmospheric pressure, rather than at an underpressure.

Vapor is generated by means of distillation of the fluid. The vapor enters a vapor space 23 that is separated from the liquid channel 12 by means of substantially fluid-impermeable membranes 20. The substantially fluid-impermeable membranes 20 are particularly hydrophobic membranes. Evidently, if the fluid is non-aqueous but rather an organic liquid, the fluid-impermeable membranes will be chosen to be impermeable for said organic fluid. The generated vapor is led from the vapor space 23 to the vapour chamber of a subsequent module - in casu the first distillation module 14 - via vapour connection 29 and arrives in the vapour channel 21. The vapour channel 21 is provided with at least one condensation wall 24. The vapour will condensate at this condensation wall 24 and be converted into distillate. Simultaneously, heat generated in the condensation process is transferred to the liquid channel 12, which is located adjacent to the condensation wall 24. In the present embodiment, the vapour channel 21 is bound by two condensation walls 24 on opposite sides. While being advantageous, this is not strictly necessary.
Liquid evaporating from the liquid channel 12 in the first membrane distillation module 14 enters the vapor space 23 through said hydrophobic membranes 20, and flows through vapour connection 29 into the vapour channel 21 of the second membrane distillation module 16. Liquid evaporating from the liquid channel 12 in the last membrane distillation module - in this embodiment the second membrane distillation module 16 - enters the vapor space 23 through hydrophobic membranes 20, and flows through vapour connection 29 into the condenser unit 42. It is therein converted into liquid and thereafter brought to a desired pressure (typically a higher pressure) by means of pump 38 (typically a vacuum pump). Instead of being led away as a separate liquid stream, the condensate from the condenser 42 may be added to a distillate collector. Distillate is collected in a distillate collector 54, from which it is pumped to a higher pressure using a vacuum pump 36. The distillate collector 54 is coupled to the distillate exits 52 of the first and second membrane distillation modules 12, 14 via a (distillate) connection 53.
It is observed for sake of clarity, that the number of fluid channels 12 in parallel within one module 40, 14, 16 may be specified on the basis of the intended distillate volume. While the number of fluid channels 12 is the same in each module 40, 14, 16 of the present embodiment, this is not necessary. While the present embodiment shows a design wherein the vapour space 23 and the vapour channel 21 are mutually coupled through an external vapour connection 29, this is not necessary. Alternative embodiments are envisageable wherein the vapour space 23 and the vapour channel 21 are merged into a "vapour channel space". In such case, the vapour channel space is suitably bounded on one side by a membrane 20 and on the opposite side by a condensation wall 24.

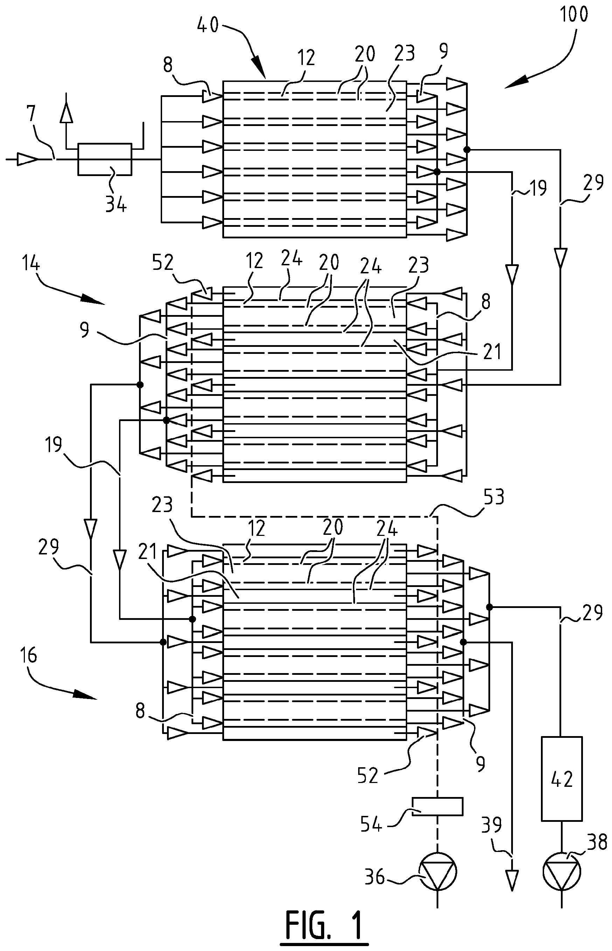

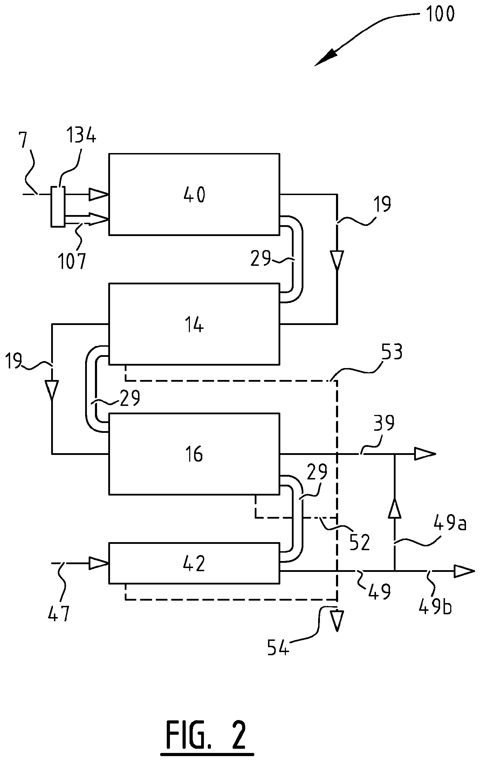

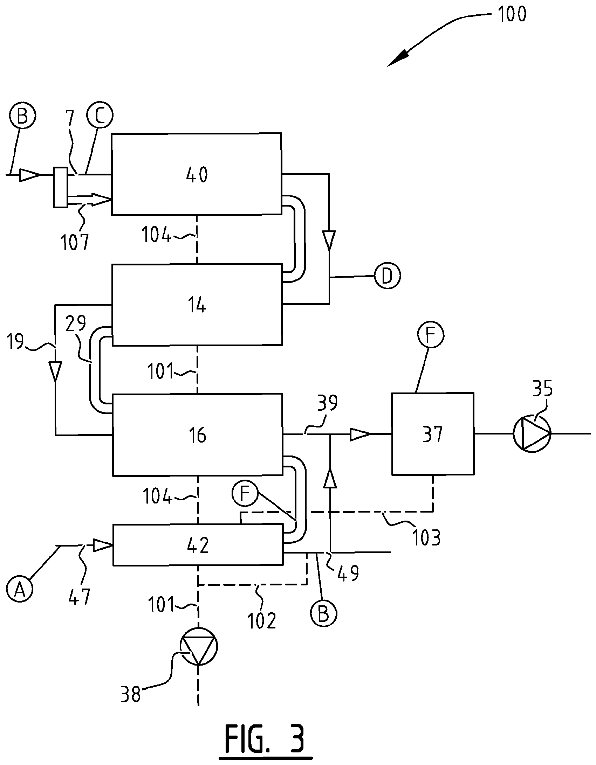

Fig. 2 and 3 show the general architecture in accordance with one embodiment of the present invention. Fig. 2 shows schematically the flows of liquid and vapour. Fig. 3 shows schematically the pressures in the system. For sake of clarity, details within the modules 40, 14, 16 are not shown, but are suitably corresponding to those shown in Figure 1. As shown in Fig 2, the system comprises a heat transfer module 40, distillation modules 14, 16 and a condenser 42. All these modules are suitably physically integrated into a single assembly. The drawn lines 7, 19, 39, 47, 49 indicate substantially liquid flows. The liquid feed 7 goes through the modules 40, 14, 16 and liquid connections 19. It is finally converted into brine 39. The cooling liquid 47 passes the condenser 42 and is obtained as warmed up cooling liquid 49. This warmed up cooling liquid 49 is suitably divided into a first stream 49a that is merged with the brine 39, and a second stream 49b for other purposes, for instance use as a feed 7.
The dotted line 52, 53 indicate distillate flows. In this example architecture, the distillate flow 52 from the first distillation module 14 is merged with the distillate flow 53 from the second distillation module 16 and the condenser to arrive at a distillate collector 54. However, as shown in Fig. 4-6, the distillate flow (pipe) 52 may be integrated in the modular assembly, such that merely a single distillate exit 53 is present.
Furthermore vapour lines 107, 29 are shown. In accordance with one embodiment of the present invention, the feed 7 is pretreated in a pretreatment module 134 to obtain a multiphase feed, i.e. a two-phase feed comprising a feed vapour 107 and a liquid feed 7. The feed vapour 107 and the liquid feed 7 are indicated separately in this Figure 2 for sake of clarity, but may physically be provided in a single pipe.
The architecture shown in Fig. 3 corresponds to that of Fig.2. For sake of clarity, the distillate channels 52, 53 are omitted. Fig. 3 intends to represent the pressure balance in one embodiment according to the invention. Particularly, the system 100 operates at underpressure. The pressure is defined with a limited number of pumps 35, 38. The pressures within the system 10 will be set during use. The pressure build-up is controlled through a vacuum pump 38. This pump sets an underpressure F which is communicated through the system via lines 101-104. Line 101 communicates the pressure to a condenser channel of the condenser 42 (i.e. the vapour channel coupled to a preceding module). Line 102 indicates the clamping vacuum (Dutch: klemvacuüm) of the system. This line 102 is a branch of the main line 101, wherein vacuum pressure is brought between the individual modules for clamping them together. Line 103 communicates the pressure from the condenser 42 to a brine collector vessel 37. A further pump 35 is coupled thereto as an output valve. A similar pump, not shown, will be coupled a distillate collector vessel. Line 104 communicates the pressure from the condenser 42 to other modules 40, 14, 16. This communications do not imply that the underpressure is identical everywhere in the system 100. An actual pressure is obtained as a dynamic equilibrium on the basis of temperature, actual amount of vapour in dependence of flow rate and evaporation rate plus condensation rate.
The membrane distillation processes resulting in evaporation of feed 7, 19 result in a pressure difference between each module 40, 14, 16. The pressure E at the entrance of the second distillation module 16 is thus higher than the pressure F in the brine collector vessel 37. The pressure D at the entrance of the first distillation module 14 is again higher than the pressure E. The pressure C at the entrance of the heat transfer module 40 is again higher. For instance, the pressure C is 0.4 bar, pressure D is 0.3 bar, pressure E is 0.2 bar and pressure F is 0.1 bar. In accordance with the invention, the feed is pretreated in a pretreatment module, so as to obtain a two-phase feed 7, 107. During this pretreatment, the feed is suitably reduced in pressure from pressure B to pressure C. Pressure B is for instance 0.7 bar. This pressure B is also available at the warmed up cooling liquid 49, notwithstanding the communicated low pressure F. In fact, atmospheric pressure A may exist at the inlet 47 of cooling liquid. The cooling liquid is then driven through the condenser on the basis of the existing pressure difference, in which process the pressure is significantly lowered relative to the inlet pressure A.

Fig. 4 shows an embodiment according to the invention comprising a jet pump 48. Jet pumps are fed with a water flow of predefined pressure and volume and are capable of providing an air pressure and volume displacement. Jet pumps are particularly attractive for larger volumes, since then an electrical vacuum pump is expensive and requires a significant energy consumption. The jet pumps, which are also but less appropriately referred to as venturi pumps, are for instance known from the product catalogue "Körting Liquid Jet Liquid Ejectors" from Körting Hannover AG, Badenstedler Straße 56, D- 30453 Hannover.

In the implementation shown in Fig. 4, the cooling liquid 47 passes the cooling channel of the condenser 42 to become a warmed-up cooling liquid flow 49. Part 49a of this flow 49 is transmitted to heat exchanger 34, so as to become feed 7. Another part 49b of the warmed-up cooling liquid flow 49 is pumped away to an output by means of pump 45. A protection valve V11 is present so as to prevent flow in an opposite direction. The pump is suitably a pump suitable for a liquid medium.

The pressure defined on the cooling liquid flow part is 100-500 mbar, suitably 200-400 bar and preferably in the range of 250-350 mbar, for instance 300 mbar. This pressure on part 49b results, in combination with an appropriate setting for valve or restriction V1 to a pressure of 600-900 mbar, suitably 700-800 mbar, for instance 750 mbar in the condenser.

Though the pump 45 is shown to be a frequency controlled pump, this is not deemed necessary. The pump 45 typically is designed for pumping from an underpressure, for instance in the order of 200-500 mbar, to an overpressure, for instance in the order of 1.5-3 bar, more preferably 2-2.5 bar. This high pressure is then used as a driving force for the jet pump 48. The jet pump 48 is herein used as the system's vacuum pump. A vacuum line 101 extends from the jet pump 48 to the vapour channel of the condenser module 42 of the physically integrated modular assembly comprising a heat transfer module 40, distillation modules 14, 16, 114, 116 and further the condenser module 42. The underpressure in the vapour channel of the condenser module 42, typically in the order of 50-90 mbar, is then communicated to the brine collector vessel 37 via pressure communication means 103.

According to the invention, any volatile solute present in the feed 7, will pass the condensation walls and enter the vacuum duct or line 101. It is then removed by means of the jet pump 48.

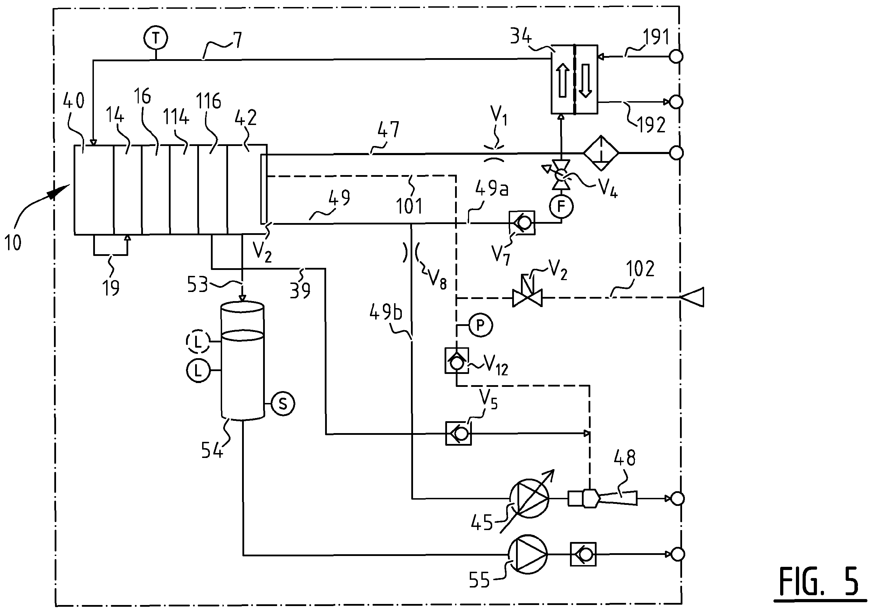

Fig.5 shows a further embodiment comprising again a jet pump 48. Herein, the jet pump 48 not only acts as the system's vacuum pump so as to apply an underpressure to the vapour channel of the condenser module 42 via vacuum line 101. The jet pump 48 furthermore acts as a brine pump. The brine outlet pipe 39 thereto is coupled to the vacuum line 101 adjacent to the jet pump, so that the brine 39 is sucked into the jet pump 48 together with any air from the vacuum line 101. The jet pump is in this embodiment suitably designed so as to remove a liquid flow. Moreover, this embodiment has the advantage that the brine collector vessel may be left out.

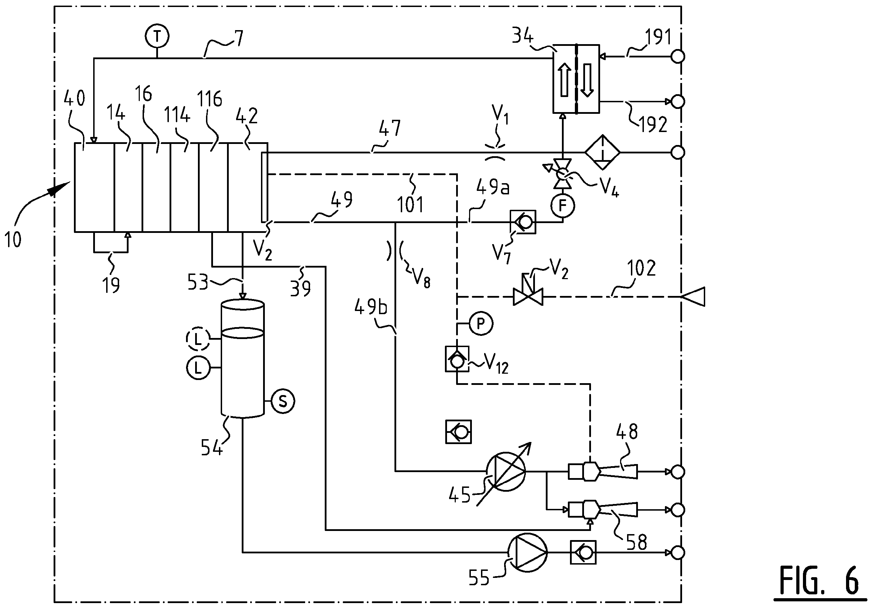

Fig. 6 shows again a further embodiment with a jet pump. In this embodiment, a first jet pump 48 is present to act as the system's vacuum pump. A second jet pump 58 is present to act as the brine pump. A bypass from the pump 45 around the jet pumps may be added, so as to arrange flowing volumes through the jet pumps, and to create some flexibility in case of an error, test or otherwise.

While all of these embodiments merely disclose a single membrane distillation unit, a second membrane distillation unit may be present. Most suitably, both membrane distillation unit would make use of a single vacuum jet pump, acting as removal means for volatile solutes. Moreover, in the event that a closed circuit is used for the heating medium, this may be suitable put at an underpressure, particularly in a storage vessel therein. The underpressure may be derived from the vacuum line 101, i.e. via an additional line. The underpressure in the storage vessel need not to be the same as the underpressure applied to the condenser module.

While all of the Figures 2-6 show embodiments wherein the feed is pretreated and used for the heat generation to the heat transfer module, this is not essential for the present invention, and alternatives or variations may be envisaged.

For sake of completeness, the valves shown in the figures have following functions:
Valve V1 is a protection valve. It is defined so as to set a maximum to a pressure difference over the condenser 42. Therewith, polymer foils in the condenser 42 acting as condensation walls between a vapour channel and a cooling channel are protected, so as to prevent tearing, aging and the like. Valve V1 is for instance embodied as a restriction device.
Valve V2 is a further and optional protection device for the event of any current interruption. The valve V2 prevents inflow of brine into the condenser via vacuum line 103, when for instance pump 35 does not work and hence an overflow of the brine collector vessel 37 occurs. In such case of current interruption, valve V2 will close automatically, therewith preventing any overflow of the brine collector vessel 37. This valve V2 is arranged in the line for the warmed up cooling liquid, since the cooling liquid flow tends to be larger than the brine flow. Evidently, a similar valve may be arranged in the brine line 39, if necessary for the prevention of any overflow. A further valve may be arranged so as to prevent, at least substantially, the backwards flow of warmed up cooling liquid after turning the apparatus off. Rather than as a valve, this protection device may further be embodied differently, for instance in the form of a hydrophobic filter present in a vacuum line 103 between the brine collector vessel 37 and the condenser.
Valve V3 serves a similar function for the feed line 7.
Valve V4 is a device for setting the underpressure in the feed line 7 and therewith creating a two-phase feed 7 + 107. Suitably, this valve V4 is implemented as a throttle valve, but alternatives such as a tap or valve are not excluded. The setting of valve V4 is suitably controlled through a controller (not shown), on the basis of the sensor signals obtained. Alternatively, the setting may be carried manually, so as to ensuring sufficient heat. The setting does not need to be modified thereafter. A reset may however be done if the system suffers from scaling and/or fouling, affecting the total feed inflow, or when less heat is available.
   The flow sensor F is in a highly preferred implementation arranged upwards from the means for providing an underpressure, such as valve V4. If the flow sensor were placed downwards from the valve V4, vapour bubbles tend to make the sensing more complex, or could result in an inappropriate sensing result. The latter is caused in that the creation of steam in the feed flow accelerates the mixture. Hence, a mass or volume measurement is no longer representative.
Valves V5 and V6 are used for preventing backwards flow due to the pressure difference, particularly after turning off the apparatus.
   This configuration suitably includes two further valves. Valve V7 is a further optional protection device so as to prevent backwards flow of warmed-up cooling liquid 49a after turning off the system, and/or in case of any current interruption.
Valve V8 is a device with which the flow rate ratio between the flows 49a and 49b can be set. This device is suitably controlled by a system controller on the basis of the sensor measurements in the course of operation. Evidently, a manual control may be used alternatively, wherein corrections are likely to be made only subsequent to an operation run.

For reasons of clarity, it is added that the valves V1, V8 are shown in this Figure as restrictions. Such implementation is advantageous in view of its robustness and simplicity, but not strictly necessary.

## Claims

1. A vacuum membrane distillation system (100) in which, in use, feed is converted into distillate and brine, comprising:
- a heat transfer means (40) for the transfer of heat into a heating channel (21), that is separated by a wall (24) from an adjacent liquid channel (12) of a membrane distillation module (14);
- a first membrane distillation module (14) comprising the heating channel (21), the wall (24) and the liquid channel (12), further comprising a feed entry (8) and a feed exit (9) and a substantially fluid-impermeable, vapour permeable membrane (20), wherein in use feed enters the liquid channel (12) through the feed entry (8) and is heated by means of the transferred heat transmitted from the heating channel (21) so as to evaporate feed liquid to vapour that may pass through the membrane (20) into a vapour space (23) coupled to a subsequent vapour channel (21) for condensation at a condensation wall (24), so as to generate distillate and transfer heat to an adjacent liquid channel (12) of a subsequent module (16);
- at least one further membrane distillation module (16), in which modules, in use, distillate is generated, which modules each comprise a vapour channel (21) provided with a condensation wall (24) for condensation of a vapour passed through a membrane (20) in a preceding membrane distillation module (14);
- a condenser module (42) for generation of distillate from vapour from a preceding, last membrane distillation module (16), comprising a vapour channel for receiving said vapour, a condensation wall and a cooling channel through which, in use a cooling liquid flows,
wherein
- each of said vapour channels (21) is further provided with a vacuum duct connection to a vacuum duct coupled to a vacuum pump (38), which vacuum duct connection is located within said vapour channel (21) at a location downstream of the condensation wall (24),
- the vacuum pump (38) is a Venturi type pump, which further constitutes removal means for removing a volatile solute from at least one of the vapour channels (21) via said vacuum duct, said removal means being resistant to said volatile solute, and
- the Venturi type pump (38) is further configured for pumping of cooling liquid after passing the condenser module (42).

2. The vacuum membrane distillation system (100) as claimed in claim 1, wherein the heat transfer means (40), the first membrane distillation module (14), the at least one further membrane distillation modules (16) and the condenser module (42) are physically integrated into a modular assembly unit.

3. The vacuum membrane distillation system (100) as claimed in claim 1 or 2, further comprising further removal means for a volatile solute from at least one of the vapour channels (21), said removal means being embodied as a further condensation wall and a separate output for condensed solute, optionally mixed with some distillate.

4. The vacuum membrane distillation system (100) as claimed in claim 1 or 2, wherein further comprising further removal means for a volatile solute from at least one of the vapour channels (21), said removal means being embodied as an output for the vapour channel of the first membrane distillation module (14), said module (14) being designed for operation under conditions at which a feed solvent does not substantially evaporate.

5. The vacuum membrane distillation system (100) as claimed in claim 1, wherein the Venturi pump is coupled to a vessel for cooling liquid, so as to pump the cooling liquid into said vessel.

6. The vacuum membrane distillation system (100) as claimed in claim 1, wherein a first part of the cooling liquid is pumped by said - first - Venturi pump, and wherein a second Venturi pump is present for pumping a second part of the cooling liquid and the brine.

7. The vacuum membrane distillation system (100) as claimed in claim 1, wherein the heat transfer means (40) are part of a closed circuit for circulation of a heating medium.

8. The vacuum membrane distillation system (100) as claimed in claim 7, wherein the closed circuit comprises a storage vessel for the heating medium that is maintained at an underpressure, said vessel being in pressure communication with the vacuum duct.

9. The vacuum membrane distillation system (100) as claimed in claim 1, wherein the heat transfer means (40) are embodied as a module, and wherein a heat exchanger is present for heating the feed to obtain the feed as a two-phase mixture, a first portion of said two-phase mixture which primarily comprises vapour being led to the heat transfer module, and a second portion of said two-phase mixture which primarily comprises liquid being led to the first membrane distillation module.

10. The vacuum membrane distillation system (100) as claimed in claim 9, wherein the first portion is transferred to the first membrane distillation module after passing the heat transfer module.

11. The vacuum membrane distillation system (100) as claimed in any of the preceding claims, wherein a first unit and a second unit are present, each unit comprising at least one membrane distillation module and a condenser module, and wherein the first and the second unit are coupled to a single removal means.

12. Use of the vacuum membrane distillation system (100) as claimed in any of the preceding claims 1 to 11 for concentration of a feed into a brine and for generation of a distillate.

13. A method of converting a feed into a distillate and brine by means of vacuum membrane distillation,
Which method comprises the steps of:
- Providing an underpressure into the vapour channel (21) of a membrane distillation module (14, 16) via the vacuum duct and the vacuum duct connection of said vapour channel (21) by means of a Venturi type vacuum pump (38) coupled to the vacuum duct;
- Evaporating a portion of the feed in the membrane distillation module (14, 16) into a vapour that passes through a substantially fluid-impermeable, vapour permeable membrane (20) into the vapour channel (21);
- Converting the vapour partly into distillate by means of condensation against a condensation wall (24); and
- Removing a volatile solute from the vapour channel (21) through the vacuum duct connection and via the Venturi type vacuum pump (38), wherein the volatile solute is spoiled away through the Venturi type vacuum pump (38), and dissolved in a cooling liquid that has passed the condenser module (42).

14. The method as claimed in claim 13, wherein the vacuum membrane distillation is carried out in a modular vacuum membrane distillation assembly comprising a heat transfer module (40), distillation modules (14, 16) and the condenser module (42).

15. The method as claimed in claim 13 or 14, wherein the cooling liquid is increased in pressure prior to passing the Venturi type vacuum pump (38).

## Patentansprüche

1. Vakuum-Membrandestillationssystem (100), bei dem im Gebrauch eine Zufuhr in Destillat und Sole umgewandelt wird, umfassend:
- ein Wärmeübertragungsmittel (40) für die Übertragung von Wärme in einen Heizkanal (21), der durch eine Wand (24) von einem benachbarten Flüssigkeitskanal (12) eines Membrandestillationsmoduls (14) getrennt ist;
- ein erstes Membrandestillationsmodul (14), das den Heizkanal (21), die Wand (24) und den Flüssigkeitskanal (12) umfasst, ferner mit einem Zufuhreingang (8) und einem Zufuhrausgang (9) und einer im Wesentlichen fluidundurchlässigen, dampfdurchlässigen Membran (20), wobei im Gebrauch eine Zufuhr in den Flüssigkeitskanal (12) durch den Zufuhreingang (8) eintritt und mittels der übertragenen Wärme erhitzt wird, die von dem Heizkanal (21) übemittelt wird, um so Zufuhrflüssigkeit zu Dampf zu verdunsten, der durch die Membran (20) in einen Dampfraum (23) gelangen kann, der mit einem nachfolgenden Dampfkanal (21) für die Kondensation an einer Kondensationswand (24) gekoppelt ist, um so Destillat zu erzeugen und Wärme an einem benachbarten Flüssigkeitskanal (12) eines nachfolgenden Moduls (16) zu übertragen;
- zumindest ein weiteres Membrandestillationsmodul (16), wobei in diesen Modulen im Gebrauch Destillat erzeugt wird, wobei die Module jeweils einen Dampfkanal (21) umfassen, der mit einer Kondensationswand (24) zur Kondensation von Dampf versehen ist, der durch eine Membran (20) in einem vorhergehenden Membrandestillationsmodul (14) gelangt ist;
- ein Kondensatormodul (42) zur Erzeugung von Destillat aus Dampf von einem vorhergehenden letzten Membrandestillationsmodul (16), das einen Dampfkanal zur Aufnahme des Dampfes, eine Kondensationswand sowie einen Kühlkanal umfasst, durch den im Gebrauch eine Kühlflüssigkeit strömt,
wobei
- jeder der Dampfkanäle (21) ferner mit einer Vakuumrohrverbindung zu einem Vakuumrohr versehen ist, das mit einer Vakuumpumpe (38) gekoppelt ist, wobei die Vakuumrohrverbindung in dem Dampfkanal (21) an einer Stelle stromabwärts der Kondensationswand (24) angeordnet ist,
- die Vakuumpumpe (38) eine Pumpe vom Venturi-Typ ist, die ferner ein Entfernungsmittel zum Entfernen eines flüchtigen gelösten Stoffes von zumindest einem der Dampfkanäle (21) über das Vakuumrohr bildet, wobei das Entfernungsmittel beständig gegenüber dem flüchtigen gelösten Stoff ist, und
- eine Pumpe (38) vom Venturi-Typ ferner zum Pumpen einer Kühlflüssigkeit nach Durchgang durch das Kondensatormodul (42) konfiguriert ist.

2. Vakuum-Membrandestillationssystem (100) nach Anspruch 1, wobei das Wärmeübertragungsmittel (40), das erste Membrandestillationsmodul (14), das zumindest eine weitere Membrandestillationsmodul (16) und das Kondensatormodul (42) physisch in eine modulare Baugruppeneinheit integriert sind.

3. Vakuum-Membrandestillationssystem (100) nach einem der Ansprüche 1 oder 2, ferner mit einem weiteren Entfernungsmittel für einen flüchtigen gelösten Stoff von zumindest einem der Dampfkanäle (21), wobei das Entfernungsmittel als eine weitere Kondensationswand und ein separater Ausgang für kondensierten gelösten Stoff, optional gemischt mit einigem Destillat, ausgeführt ist.

4. Vakuum-Membrandestillationssystem (100) nach einem der Ansprüche 1 oder 2, ferner mit einem weiteren Entfernungsmittel für einen flüchtigen gelösten Stoff von zumindest einem der Dampfkanäle (21), wobei das Entfernungsmittel als ein Ausgang für den Dampfkanal des ersten Membrandestillationsmoduls (14) ausgeführt ist, wobei das Modul (14) zum Betrieb unter Bedingungen ausgelegt ist, bei denen ein Zufuhrlösemittel im Wesentlichen nicht verdunstet.

5. Vakuum-Membrandestillationssystem (100) nach Anspruch 1, wobei die Venturipumpe mit einem Gefäß zum Kühlen von Flüssigkeit gekoppelt ist, um so die Kühlflüssigkeit in das Gefäß zu pumpen.

6. Vakuum-Membrandestillationssystem (100) nach Anspruch 1, wobei ein erster Teil der Kühlflüssigkeit durch die - erste - Venturipumpe gepumpt ist und wobei eine zweite Venturipumpe zum Pumpen eines zweiten Teils der Kühlflüssigkeit und der Sole vorhanden ist.

7. Vakuum-Membrandestillationssystem (100) nach Anspruch 1, wobei das Wärmeübertragungsmittel (14) Teil eines geschlossenen Kreislaufs zur Zirkulation eines Heizmediums ist.

8. Vakuum-Membrandestillationssystem (100) nach Anspruch 7, wobei der geschlossene Kreislauf ein Speichergefäß für das Heizmedium umfasst, das bei einem Unterdruck beibehalten ist, wobei das Gefäß in Druckkommunikation mit dem Vakuumrohr steht.

9. Vakuum-Membrandestillationssystem (100) nach Anspruch 1, wobei das Wärmeübertragungsmittel (40) als ein Modul ausgeführt ist, und wobei ein Wärmetauscher zum Heizen der Zufuhr vorhanden ist, um die Zufuhr als ein Zweiphasengemisch zu erhalten, wobei ein erster Abschnitt des Zweiphasengemisches, das hauptsächlich Dampf umfasst, zu dem Wärmeübertragungsmodul geführt ist und ein zweiter Abschnitt des Zweiphasengemisches, das hauptsächlich Flüssigkeit umfasst, zu dem ersten Membrandestillationsmodul geführt ist.

10. Vakuum-Membrandestillationssystem (100) nach Anspruch 9, wobei der erste Abschnitt an das erste Membrandestillationsmodul nach Durchgang durch das Wärmeübertragungsmodul übertragen ist.

11. Vakuum-Membrandestillationssystem (100) nach einem der vorhergehenden Ansprüche, wobei eine erste Einheit und eine zweite Einheit vorhanden sind, wobei jede Einheit zumindest ein Membrandestillationsmodul und ein Kondensatormodul umfasst, und wobei die erste und die zweite Einheit mit einem einzelnen Entfernungsmittel gekoppelt sind.

12. Verwendung des Vakuum-Membrandestillationssystems (100) nach einem der Ansprüche 1 bis 11 zur Konzentration einer Zufuhr in eine Sole und zur Erzeugung eines Destillats.

13. Verfahren zum Umwandeln einer Zufuhr in ein Destillat und Sole mittels einer Vakuum-Membrandestillation,
wobei das Verfahren die Schritte umfasst, das:
- ein Unterdruck in den Dampfkanal (21) eines Membrandestillationsmoduls (14, 16) über das Vakuumrohr und die Vakuumrohrverbindung des Dampfkanals (21) mittels einer Vakuumpumpe (38) vom Venturi-Typ, die mit dem Vakuumrohr gekoppelt ist, vorgesehen wird;
- ein Abschnitt der Zufuhr in dem Membrandestillationsmodul (14, 16) in einen Dampf verdunstet wird, der durch eine im Wesentlichen fluidundurchlässige, dampfdurchlässige Membran (20) in den Dampfkanal (21) gelangt;
- der Dampf teilweise in Destillat mittels einer Kondensation gegen eine Kondensationswand (24) umgewandelt wird; und
- ein flüchtiger gelöster Stoff von dem Dampfkanal (21) durch die Vakuumrohrverbindung und über die Vakuumpumpe (38) vom Venturi-Typ entfernt wird, wobei der flüchtige gelöste Stoff durch die Vakuumpumpe (38) vom Venturi-Typ weggeführt und in einer Kühlflüssigkeit gelöst wird, die durch das Kondensatormodul (42) gelangt ist.

14. Verfahren nach Anspruch 13, wobei die Vakuum-Membrandestillation in einer modularen Vakuum-Membrandestillationsbaugruppe ausgeführt ist, die ein Wärmeübertragungsmodul (40), Destillationsmodule (14, 16) und das Kondensatormodul (42) umfasst.

15. Verfahren nach einem der Ansprüche 13 oder 14, wobei der Druck der Kühlflüssigkeit vor Durchgang durch die Vakuumpumpe (38) vom Venturi-Typ erhöht wird.

## Revendications

1. Système de distillation à membrane sous vide (100) dans lequel, en utilisation, un produit alimenté est converti en distillat et en saumure, comprenant :
- un moyen de transfert de chaleur (40) pour le transfert de chaleur dans un canal de chauffage (21), qui est séparé par une paroi (24) vis-à-vis d'un canal à liquide adjacent (12) d'un module de distillation à membrane (14) ;
- un premier module de distillation à membrane (14) comprenant le canal de chauffage (21), la paroi (24) et le canal à liquide (12), comprenant en outre une entrée de produit alimenté (8) et une sortie de produit alimenté (9), et une membrane (20) sensiblement imperméable au fluide et perméable à la vapeur, dans lequel, en utilisation, un produit alimenté entre dans le canal à liquide (12) via l'entrée de produit alimenté (8) et est chauffé au moyen de la chaleur transférée transmise depuis le canal de chauffage (21) de manière à faire évaporer le liquide alimenté en donnant de la vapeur qui peut passer à travers la membrane (20) jusque dans un espace à vapeur (23) couplé à un canal à vapeur ultérieur (21) pour sa condensation sur une paroi de condensation (24), de manière à générer un distillat et transférer de la chaleur à un canal à liquide adjacent (12) d'un module ultérieur (16) ;
- au moins un autre module de distillation à membrane (16) dans lequel, en utilisation, un distillat est généré, lesdits modules comprenant chacun un canal à vapeur (21) doté d'une paroi de condensation (24) pour la condensation d'une vapeur qui passe à travers une membrane (20) dans un module de distillation à membrane précédent (14) ;
- un module condenseur (42) pour la génération de distillat à partir de la vapeur depuis un dernier module de distillation à membrane (16) précédent, comprenant un canal à vapeur pour recevoir ladite vapeur, une paroi de condensation et un canal de refroidissement à travers lequel s'écoule un liquide de refroidissement en utilisation,
dans lequel
- chacun desdits canaux à vapeur (21) est en outre doté d'une connexion de conduit sous vide vers un conduit sous vide couplé à une pompe à vide (38), ladite connexion de conduit sous vide étant située à l'intérieur dudit canal à vapeur (21) à un emplacement en aval de la paroi de condensation (24),
- la pompe à vide (38) est une pompe du type venturi, qui constitue en outre un moyen d'enlèvement pour enlever un soluté volatile hors de l'un au moins des canaux à vapeur (21) via ledit conduit sous vide, ledit moyen d'enlèvement étant résistant vis-à-vis dudit soluté volatile, et
- la pompe de type venturi (38) est en outre configurée pour pomper du liquide de refroidissement après être passé par le module condenseur (42).

2. Système de distillation à membrane sous vide (100) selon la revendication 1, dans lequel le moyen de transfert de chaleur (40), le premier module de distillation à membrane (14), ledit au moins un autre module de distillation à membrane (16) et le module condenseur (42) sont physiquement intégrés dans une unité d'assemblage modulaire.

3. Système de distillation à membrane sous vide (100) selon la revendication 1 ou 2, comprenant en outre un autre moyen d'enlèvement pour un soluté volatile depuis l'un au moins des canaux à vapeur (21), ledit moyen d'enlèvement étant réalisé sous la forme d'une autre paroi de condensation et d'une sortie séparée pour le soluté condensé, mélangé en option avec un peu de distillat.

4. Système de distillation à membrane (100) selon la revendication 1 ou 2, comprenant en outre un autre moyen d'enlèvement pour un soluté volatile depuis l'un au moins des canaux à vapeur (21), ledit moyen d'enlèvement étant réalisé sous la forme d'une sortie pour le canal à vapeur du premier module de distillation à membrane (14), ledit module (14) étant conçu pour fonctionner sous des conditions auxquelles un solvant alimenté n'est pas sensiblement évaporé.

5. Système de distillation à membrane sous vide (100) selon la revendication 1, dans lequel la pompe venturi est couplée à un récipient pour liquide de refroidissement, de manière à pomper le liquide de refroidissement jusque dans ledit récipient.

6. Système de distillation à membrane sous vide (100) selon la revendication 1, dans lequel une première partie du liquide de refroidissement est pompée par ladite première pompe venturi, et dans lequel une seconde pompe venturi est présente pour pomper une seconde partie du liquide de refroidissement et la saumure.

7. Système de distillation à membrane sous vide (100) selon la revendication 1, dans lequel le moyen de transfert de chaleur (40) fait partie d'un circuit fermé pour la circulation d'un milieu chauffant.

8. Système de distillation à membrane sous vide (100) selon la revendication 7, dans lequel le circuit fermé comprend un récipient de stockage pour le milieu chauffant qui est maintenu sous une dépression, ledit récipient étant en communication de pression avec le conduit à vide.

9. Système de distillation à membrane sous vide (100) selon la revendication 1, dans lequel le moyen de transfert de chaleur (40) est réalisé sous forme de module, et dans lequel un échangeur de chaleur est présent pour chauffer le produit alimenté et obtenir le produit alimenté sous forme de mélange à deux phases, une première portion dudit mélange à deux phases, qui comprend de façon primaire de la vapeur, étant amené au module de transfert de chaleur, et une seconde portion dudit mélange à deux phases, qui comprend de façon primaire du liquide, étant amené au premier module de distillation à membrane.

10. Système de distillation à membrane sous vide (100) selon la revendication 9, dans lequel la première portion est transférée au premier module de distillation à membrane après être passée par le module de transfert de chaleur.

11. Système de distillation à membrane sous vide (100) selon l'une quelconque des revendications précédentes, dans lequel une première unité et une seconde unité sont présentes, chaque unité comprenant au moins un module de distillation à membrane et un module condenseur, et dans lequel la première et la seconde unité sont couplées à un unique moyen d'enlèvement.

12. Utilisation du système de distillation à membrane sous vide (100) selon l'une quelconque des revendications précédentes 1 à 11 pour la concentration d'un produit alimenté en donnant une saumure et pour la génération d'un distillat.

13. Procédé pour convertir un produit alimenté en distillat et en saumure au moyen d'une distillation à membrane sous vide,
ledit procédé comprenant les étapes consistant à :
- appliquer une dépression dans le canal à vapeur (21) d'un module de distillation à membrane (14, 16) via le conduit à vide et la connexion de conduit à vide dudit canal à vapeur (21) au moyen d'une pompe à vide du type Venturi (38) couplée au conduit à vide ;
- faire évaporer une portion du produit alimenté dans le module de distillation à membrane (14, 16) en donnant une vapeur qui passe à travers une membrane sensiblement imperméable au fluide et perméable à la vapeur (20) vers le canal à vapeur (21) ;
- convertir la vapeur partiellement en distillat au moyen d'une condensation contre une paroi de condensation (24) ; et
- supprimer un soluté volatile hors du canal à vapeur (21) via la connexion de conduit sous vide et via la pompe à vide du type Venturi (38), dans lequel le soluté volatile est évacué via la pompe à vide du type Venturi (38), et dissout dans un liquide de refroidissement qui est passé par le module condenseur (42).

14. Procédé selon la revendication 13, dans lequel la distillation à membrane sous vide est effectuée dans un ensemble de distillation à membrane sous vide modulaire comprenant un module de transfert de chaleur (40), des modules de distillation (14, 16) et le module condenseur (42).

15. Procédé selon la revendication 13 ou 14, dans lequel la pression du liquide de refroidissement est augmentée avant de passer par la pompe à vide du type Venturi (38).
